# EUROPÄISCHE PATENTSCHRIFT

(11) **EP 1 597 491 B1**
(45) Veröffentlichungstag und Bekanntmachung des Hinweises auf die Patenterteilung: **25.03.2009**
(21) Anmeldenummer: 04709216.8
(22) Anmeldetag: 09.02.2004
(51) Int. Cl.: F16D 55/02

(54) **BREMSSATTEL**
BRAKE CALIPER
ETRIER DE FREIN

(30) Priorität: 14.02.2003 DE 10306137
(43) Veröffentlichungstag der Anmeldung: 23.11.2005
(73) Patentinhaber: TMD Friction Services GmbH, 51381 Leverkusen (DE); AUDI AG, 85057 Ingolstadt (DE)
(72) Erfinder: EISENGRÄBER, Reinhard, 53343 Wachtberg (DE); TERFLOTH, Kristof, 71717 Beilstein (DE)
(74) Vertreter: Müller, Eckhard
(86) Internationale Anmeldenummer: PCT/EP2004/001156
(87) Internationale Veröffentlichungsnummer: WO 2004/072506

(56) Entgegenhaltungen:
- EP-A- 0 489 453
- DE-A- 2 440 076
- DE-A- 4 020 668
- DE-A- 4 236 684
- DE-A- 19 849 309
- US-A- 5 464 077
- PATENT ABSTRACTS OF JAPAN vol. 1996, no. 05, 31. Mai 1996 (1996-05-31) & JP 08 021463 A (NISSIN KOGYO KK), 23. Januar 1996 (1996-01-23)

## Beschreibung

Die Erfindung betrifft einen Bremssattel einer Bremse, insbesondere einer Scheibenbremse für Kraftfahrzeuge, mit mindestens zwei einander gegenüberliegenden, einen Freiraum zwischen sich definierenden erhabenen Abschnitten, die durch eine den Freiraum überspannende Verbindungseinrichtung miteinander verbunden sind.

Beim Abbremsen eines Kraftfahrzeugs kann es zu Bremsgeräuschen kommen. Ursache dieser Geräusche sind Schwingungen des Bremssystems, die in einem weiten Frequenzbereich auftreten können. Als besonders störend wird das sogenannte "Bremsenquietschen" empfunden, das bei Frequenzen oberhalb von ca. 1 kHZ auftritt. Bei Schwingungen mit niedrigerer Frequenz (bis 400 Hz) spricht man vom "Bremsenrubbeln". Letzteres ist sowohl hör- als auch über das Lenkrad fühlbar.

In der Praxis sind bereits verschiedenste Massnahmen getroffen worden, um die Schwingungen zu reduzieren. So ist es beispielsweise bekannt, am Bremssattel Gewichte anzubringen, um dadurch die Eigenfrequenz zu erhöhen. Die Wirkung einer derartigen Massnahme ist jedoch beschränkt. Ausserdem ist der zur Verfügung stehende Raum für die Anbringung der Gewichte häufig begrenzt.

Aus der DE 198 49 309 A1 ist eine Sattelvorrichtung für eine Scheibenbremse bekannt, wobei über eine Öffnung, welche eine Bremsbacke und Bremsscheibe einfasst, eine abnehmbare Zugstrebe angebracht ist, die einen wesentlichen Teil des bei Bremsungen auftretenden Kraftflusses von der Sattelvorderseite zum Sattelrücken aufnimmt. Hierdurch können die ansonsten sehr hohen Spannungen an den kritisch beanspruchten Bereichen des Sattelrahmens reduziert werden. Eine gezielte Manipulation von bremsbedingten Schwingungsanregungen des Bremssattels wird hierdurch jedoch nicht ermöglicht.

Der Erfindung liegt demgegenüber die Aufgabe zugrunde, die zu Bremsgeräuschen führenden Schwingungen noch weiter zu reduzieren und unterschiedliche Arten von Bremssätteln im Hinblick auf eine geringe Geräuschentwicklung zu optimieren.

Diese Aufgabe wird durch die Merkmale des Anspruchs 1 gelöst.

Der Erfindung liegt die Erkenntnis zugrunde, dass eine rein mechanische Verbindung nicht die gewünschte Geräuschreduzierung bringt, sondern dass vielmehr eine zusätzliche Verspannung des Bremssattels - also das Aufbringen von Zug- oder Druckkräften - unerwünschte Bremsgeräusche drastisch reduziert. Die Verbindungseinrichtung erstreckt sich seitlich des Bremssattels. Über den Grad der Verspannung lassen sich unterschiedliche Arten von Bremssätteln im Hinblick auf eine geringe Geräuschentwicklung optimieren. Die Erfindung wirkt sich auch positiv auf den Bremskomfort aus und verringert im Laufe der Lebensdauer auftretende Dickenunterschiede der Scheibe.

Der Bremssattel kann als Festsattel oder als Schwimmsattel für eine Scheibenbremse ausgebildet sein und die Bremsscheibe beidseitig umgreifen, wobei vorzugsweise die Aussenseite des Bremssattels die erhabenen Abschnitte bildet. Die Aussenseite des Bremssattels kann konstruktionsbedingt bei einem Bremsvorgang besonders leicht in Schwingung geraten, wobei die Verbindungseinrichtung gerade an diesen Stellen angreift und die Schwingungen durch die aufgebrachte Verspannung effektiv reduziert.

Die Verbindungseinrichtung kann auf verschiedene Weise am Bremssattel befestigt sein. Besonders vorteilhaft ist es, wenn die erhabenen Abschnitte als Plateau ausgebildet sind und die Plateaus ein Innengewinde aufweisen. Die Plateaus dienen als Auflagefläche für die Verbindungseinrichtung. Sie können bereits bei der Herstellung des Bremssattels mitgefertigt oder im Nachhinein hergestellt werden. Einen nachträglichen Einbau der Verbindungseinrichtung wird man dann vornehmen, wenn die entsprechende Bremse bei ihrem Einsatz Bremsgeräusche entwickelt. Es sind also auch ältere Modelle "nachrüstbar".

Vorteilhafterweise ist die Verbindungseinrichtung strebenartig ausgebildet. Sie kann auf die Plateaus aufgeschraubt sein. Alternativ oder zusätzlich zu der Verschraubung kann die Verbindungseinrichtung die erhabenen Abschnitte bzw. Plateaus hintergreifen. Dies dient einer zusätzlichen Verankerung.

Alternativ zu der strebenartigen Ausbildung der Verbindungseinrichtung wird vorgeschlagen, daß die Verbindungseinrichtung aus einem Seil besteht. Das Seil wird in aller Regel als Drahtseil ausgebildet sein und kann selbstverständlich nur Zugkräfte übertragen. Ein Seil als Verbindungseinrichtung hat den Vorteil eines geringen Gewichts bei gleichzeitiger Verspannung der erhabenen Abschnitte.

Die Verspannung des Bremssattels kann auf verschiedene Weise bewirkt werden. Eine besonders einfache Möglichkeit besteht darin, die Abmessungen der Befestigungen der Verbindungseinrichtung größer oder kleiner zu wählen als die entsprechenden Abmessungen am Bremssattel. Bei einer strebenartigen Verbindungseinrichtung wird man also den Abstand der Befestigungsöffnungen - je nachdem, ob eine Verspannung in Zug- oder in Druckrichtung gewünscht ist - kleiner oder größer wählen als den Abstand der den erhabenen Abschnitten zugeordneten Befestigungsöffnungen. Beim Verschrauben werden dann die erhabenen Abschnitte verspannt. Alternativ kann ein Spannschloß vorgesehen sein, wie es in wesentlicher Weiterbildung der Erfindung vorgeschlagen wird. Das Spannschloß kann z.B. ein Rechts-/Linksgewinde tragen, über das die verspannung eingestellt wird. Ein Spannschloß ist besonders einfach handhabbar und insbesondere variabel einsetzbar. So kann eine (einzige) Verbindungseinrichtung mit Spannschloß bei mehreren Arten von Bremssätteln eingesetzt werden.

Durch die als gesondertes Element zusätzlich an den Bremssattel angebrachte Verbindungseinrichtung ist es möglich, den Funktionsbereich des Bremssattels zu erweitern. Beispielsweise kann die Verbindungseinrichtung als Kabelhalter oder als Schlauchhalter dienen. Gleichermaßen ist die Ausbildung als Designelement denkbar. Gerade in jüngster Zeit wird es häufig angestrebt, ursprünglich ausschließlich funktionelle Bauteile mit einem besonderen Design zu versehen, das auf den Hersteller hinweist und/oder eine ästhetiche Komponente aufweist. Eine weitere Funktion kann der Verbindungseinrichtung dadurch zugeordnet werden, daß sie als Kühlelement ausgebildet ist. Beispielsweise wird vorgeschlagen, die Verbindungseinrichtung mit einem oder mehreren Luftleitblechen zu versehen, die Luft in Richtung auf die Bremse leiten und eine zusätzliche Kühlung der Bremse bewirken. Über die Funktion als Schwingungstilger hinaus kann die Verbindungseinrichtung also auch Spitzentemperaturen an Bremsen reduzieren und damit die Bremswirkung verbessern.

Im folgenden wird die Erfindung von bevorzugten Ausführungsbeispielen und Meßergebnissen im Zusammenhang mit der beiliegenden Zeichnung näher erläutert. Die Zeichnung zeigt in:
Figur 1 in schematischer Darstellung eine perspektivische Ansicht eines ersten Ausführungsbeispiels nach der Erfindung;
Figur 2 in schematischer Darstellung eine Schnittansicht durch ein zweites Ausführungsbeispiel nach der Erfindung, und zwar in Verbindung mit einer Bremsscheibe;
Figur 3A Ergebnisse einer Messung von bei einem Bremsvorgang auftretenden Geräuschen eines herkömmlichen Bremssattels ohne Verbindungseinrichtung; und
Figur 3B Ergebnisse einer Messung von bei einem Bremsvorgang auftretenden Geräuschen eines erfindungsgemäßen Bremssattels.

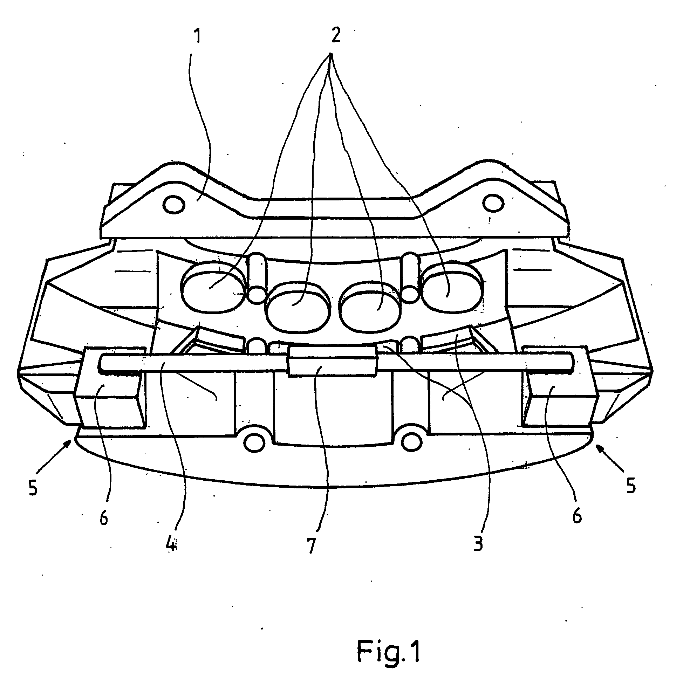

Figur 1 zeigt einen erfindungsgemäßen Bremssattel, der als Festsattel ausgebildet ist. Mit einer Halterung 1 wird der Festsattel an einer (nicht gezeigten) Kfz-Achse befestigt. Der Bremssattel weist auf jeder Seite vier Kolben 2 auf, die bei einem Bremsvorgang gegen einen (nur auf einer Seite gezeigten) Bremsbelag 3 drücken und den Bremsbelag gegen eine (nicht gezeigte) Bremsscheibe pressen.

Beim Bremsvorgang kann es zur Geräuschentwicklung kommen, die durch Schwingungen der Bremse hervorgerufen wird. Derartige Bremsgeräusche sind unerwünscht. Erfindungsgemäß ist eine Verbindungseinrichtung 4 vorgesehen, die im vorliegenden Ausführungsbeispiel stabförmig ausgebildet ist und zwei erhabene Abschnitte 5 des Bremssattels verspannt. Durch die aufgebrachten Zug-(oder Druck-) kräfte verändern sich die Schwingungscharakteristika des Bremssattels. Die Eigenfrequenz des Bremssattels wird verschoben.

Besonders wirksam ist die Erfindung dort, wo erhabene Abschnitte eines Bremssattels verhältnismäßig weit vom Bremssattel abstehen und damit ohne die Erfindung "frei" schwingen können. Bei einem Festsattel liegen diese Abschnitte auf dessen Außenseite. Die gegenseitige Verspannung dieser erhabenen Abschnitte verringert die Schwingungsneigung deutlich.

Bei dem Ausführungsbeispiel gemäß Figur 1 sind die erhabenen Abschnitte als Plateau 6 ausgebildet. Die Verbindungseinrichtung 4 ist auf den Plateaus besonders günstig befestigbar. In den Plateaus können Innengewinde ausgebildet sein, wobei die Verbindungseinrichtung 4 über eine (nicht gezeigte) Schraube auf den Plateaus festgeschraubt wird. Im vorliegenden Fall ist eine Schweißlösung angedeutet. Als vorteilhaft wird auch eine Verschraubung angesehen. Als weitere Befestigungsarten kommen grundsätzlich in Frage: Nieten, Vertaumeln, Verklipsen, Einstecken. Im übrigen können die Plateaus 6 bereits mit der Herstellung des Bremssattels vorgesehen sein oder - beispielsweise durch eine Schleif- oder Fräsbehandlung der erhabenen Abschnitte 5 - nachträglich gefertigt werden.

Grundsätzlich können die Zug- oder Druckkräfte durch Abstimmung der geometrischen Abmessungen der Verbindungseinrichtung 4 in bezug auf die erhabenen Abschnitte 5 eingestellt werden. Es ist auch denkbar, daß die Verspannung durch eine Schrägstellung mindestens eines der in den erhabenen Abschnitten 5 ausgebildeten Gewinde erfolgt. Das konkrete Ausführungsbeispiel gemäß Figur 1 weist eine Spannvorrichtung 7 mit einem Rechts-/Links-Gewinde auf, über die die Zug- bzw. Druckkraft einstellbar ist. Ein derartiges Spannschloß ist leicht herstellbar und hat eine hohe Lebensdauer. Mit einer einzigen mit einem Spannschloß ausgestatteten Verbindungseinrichtung können mehrere Arten von Bremssätteln verspannt werden. Die Länge der Verbindungseinrichtung wird durch entsprechende Stellung des Spannschlosses angepaßt.

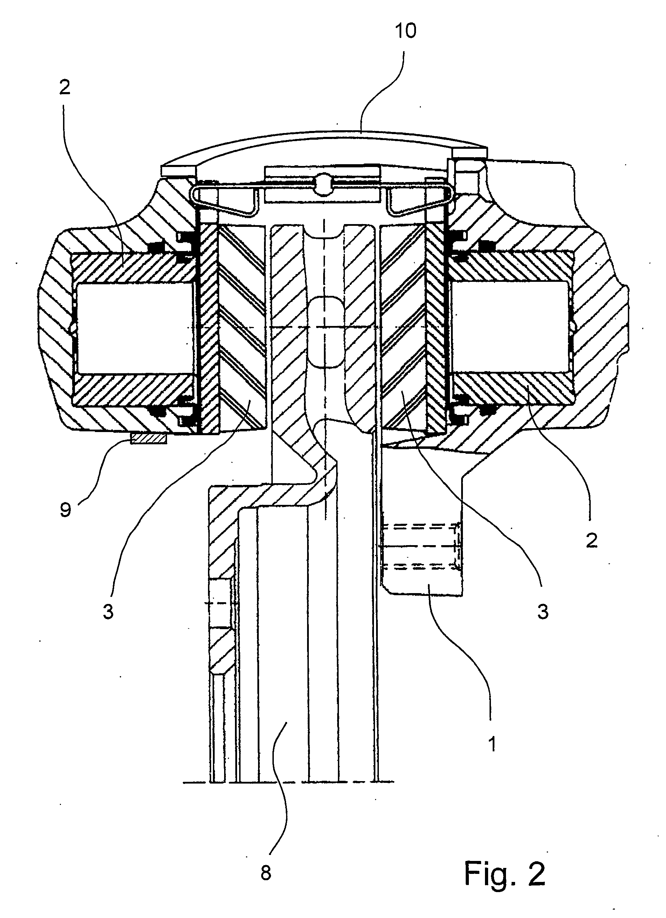

Figur 2 zeigt in einer seitlichen Schnittansicht ein zweites erfindungsgemäßes Ausführungsbeispiel, wobei zur Verdeutlichung eine Bremsscheibe 8 ergänzt ist. Der Halter 1 ist einteilig mit dem Bremssattel ausgebildet.

An der Außenseite des Bremssattels ist eine Verbindungseinrichtung 9 angeordnet, die strebenartig ausgebildet ist. Ferner ist eine zweite Leiste 10 vorgesehen, die die beiden Seiten des Bremssattels verspannt.

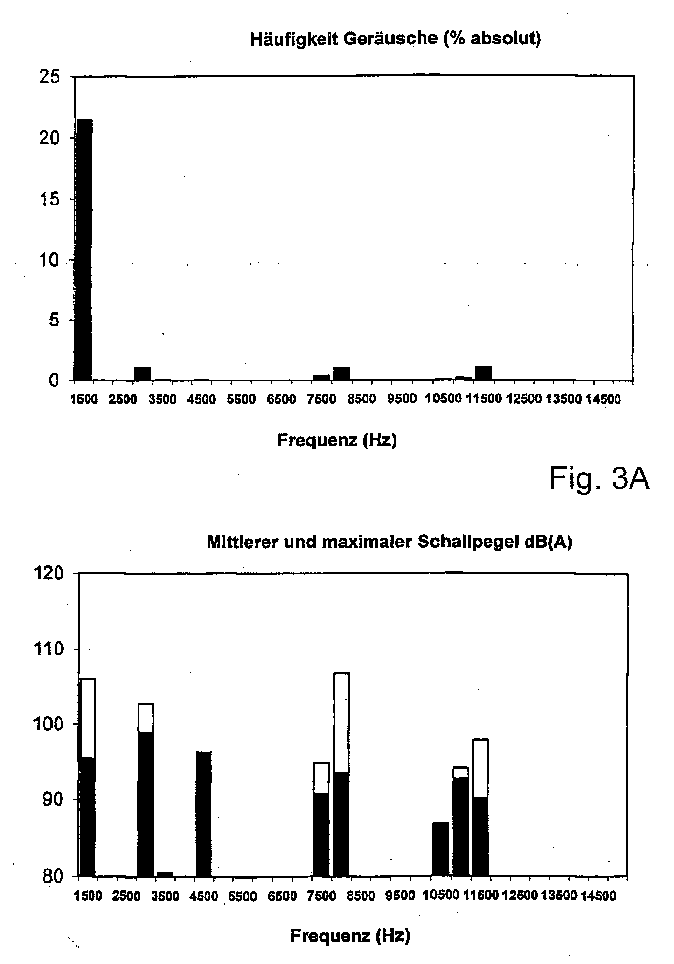

Figur 3A zeigt Meßergebnisse in Verbindung mit einem herkömmlichen Festsattel. Im oberen Schaubild ist auf der Abszisse die Frequenz, bei der Schwingungen auftreten, und auf der Ordinate die Häufigkeit der auftretenden Geräusche (in %) aufgetragen. Demgemäß wurden bei insgesamt neun Frequenzbereichen (1,5 kHZ, 3 kHZ, 3,5 kHZ, 4,5 kHZ, 7,5 kHZ, 8 kHZ, 10,5 kHZ, 11 kHZ, 11,5 kHZ) Geräuschentwicklungen gemessen, wobei insbesondere die Häufigkeit der Geräuschentwicklung bei einer Frequenz von 1,5 kHZ signifikant war.

Das untere Schaubild von Figur 3A zeigt den mittleren und den maximalen Schallpegel in dB bei den entsprechenden Frequenzen des oberen Schaubilds. Die dunklen Balken entsprechen dem mittleren Schallpegel, und die hellen Balken entsprechen dem maximalen Schallpegel. Einige der maximalen Schallpegel erreichen Spitzenwerte von über 100 dB.

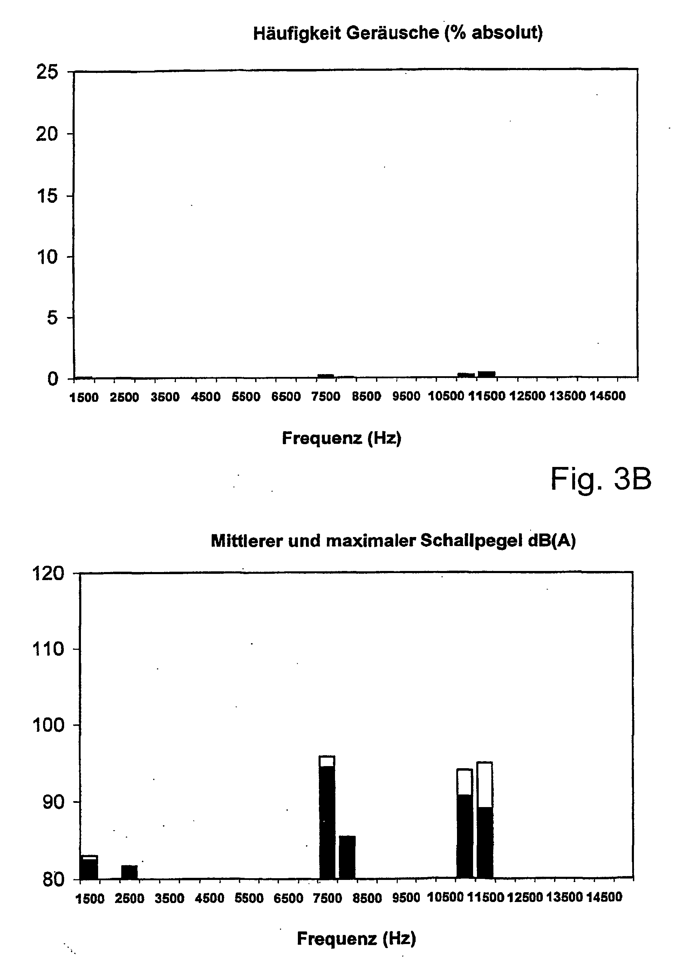

Figur 3B zeigt in gleichem Aufbau wie Figur 3A im oberen Schaubild die Häufigkeit der Geräusche in Abhängigkeit von der Frequenz und im unteren Schaubild die entsprechenden mittleren und maximalen Schallpegel. Es ist deutlich zu sehen, daß die Häufigkeit der Geräusche bei der Verwendung einer erfindungsgemäßen Verbindungseinrichtung, die Zug- oder Druckkräfte aufbringt, drastisch reduziert werden kann. Bei einer Frequenz von 1,5 kHZ treten kaum noch Geräusche auf. Auch die Höhe des Schallpegels konnte beinahe über den gesamten Frequenzbereich deutlich reduziert werden.

Im Rahmen des Erfindungsgedankens sind durchaus Abwandlungen möglich. So ist die Verbindungseinrichtung nicht auf ein spezielles Material festgelegt. Sie kann beispielsweise als Metall- oder als Kunststoffteil ausgebildet sein. Auch eine Kohlefaserkonstruktion ist denkbar. Die Ausführung des Sattels kann beliebig gewählt sein. Der Bremssattel kann einteilig oder auch mehrteilig ausgebildet sein. Er kann aus Guß, Aluminium oder beispielsweise aus einer Magnesiumlegierung bestehen. Ferner ist die Erfindung anwendbar auf Bremssättel mit unterschiedlicher Betätigung, z.B. hydraulisch, pneumatisch, elektrisch, etc. Im übrigen können zusätzlich zu der erfindungsgemäßen Verspannung Gewichte nach herkömmlicher Art am Bremssattel angebracht sein.

## Patentansprüche

1. Bremssattel einer Bremse, insbesondere einer Scheibenbremse für Kraftfahrzeuge, mit mindestens zwei einander gegenüberliegenden, einen Freiraum zwischen sich definierenden erhabenen Abschnitten (5), die durch eine den Freiraum überspannende Verbindungseinrichtung (4; 9) miteinander verbunden sind, wobei zur Reduzierung von während des Betriebes der Bremse auftretenden Geräuschen über die Verbindungseinrichtung (4; 9) Druck- oder Zugkräfte auf die erhabenen Abschnitte (5) aufgebracht sind, **dadurch gekennzeichnet, dass** sich die Verbindungseinrichtung (4; 9) seitlich des Bremssattels auf einer Seite der Bremsscheibe erstreckt.

2. Bremssattel nach Anspruch 1, wobei der Bremssattel als Festsattel oder als Schwimmsattel für eine Scheibenbremse ausgebildet ist und die Bremsscheibe beidseitig umgreift, **dadurch gekennzeichnet, daß** die Außenseite des Bremssattels die erhabenen Abschnitte (5) bildet.

3. Bremssattel nach Anspruch 1 oder 2, **dadurch gekennzeichnet, daß** die erhabenen Abschnitte (5) als Plateau (6) ausgebildet sind, die ein Innengewinde aufweisen.

4. Bremssattel nach einem der Ansprüche 1 bis 3, **dadurch gekennzeichnet, daß** die Verbindungseinrichtung (4;9;10) strebenartig ausgebildet und auf die Plateaus (6) aufgeschraubt ist.

5. Bremssattel nach einem der Ansprüche 1 bis 3, **dadurch gekennzeichnet, daß** die Verbindungseinrichtung (4;9;10) seilartig ausgebildet ist.

6. Bremssattel nach einem der Ansprüche 1 bis 5, **dadurch gekennzeichnet, daß** die Verbindungseinrichtung (4;9;10) ein Spannschloß (7) aufweist, über das die auf die erhabenen Abschnitte (5) aufgebrachte Druck- bzw. Zugkraft einstellbar ist.

7. Bremssattel nach einem der Ansprüche 1 bis 6, **dadurch gekennzeichnet, daß** die Verbindungseinrichtung (4;9;10) als Kühlelement wirkt.

## Claims

1. Brake calliper of a brake, particularly of a disc brake for motor vehicles, with at least two mutually opposite elevated sections (5), which define a free space therebetween and which are connected together by a connecting device (4; 9) spanning the free space, wherein pressure or tension forces are applied to the elevated sections (5) by way of the connecting device (4; 9) for reducing noises arising during operation of the brake, **characterised in that** the connecting device (4; 9) extends laterally of the brake calliper to one side of the brake disc.

2. Brake calliper according to claim 1, wherein the brake calliper is constructed as a fixed calliper or as a floating calliper for a disc brake and engages around the brake disc on both sides, **characterised in that** the outer side of the brake calliper forms the elevated sections (5).

3. Brake calliper according to claim 1 or 2, **characterised in that** the elevated sections (5) are constructed as plateaux (6), which have an internal thread.

4. Brake calliper according to any one of claims 1 to 3, **characterised in that** the connecting device (4; 9; 10) is of strut-like construction and is screwed onto the plateaux (6).

5. Brake calliper according to any one of claims 1 to 3, **characterised in that** the connecting device (4; 9; 10) is of cable-like construction.

6. Brake calliper according to any one of claims 1 to 5, **characterised in that** the connecting device (4; 9; 10) has a turnbuckle (7) by way of which the pressure or tension force applied to the elevated sections (5) is settable.

7. Brake calliper according to any one of claims 1 to 6, **characterised in that** the connecting device (4; 9; 10) acts as a cooling element.

## Revendications

1. Etrier de frein pour un frein, en particulier pour un frein à disque pour véhicules automobiles, comprenant deux parties en relief (5) opposées l'une à l'autre, définissant entre elles un espace vide, parties qui sont reliées l'une à l'autre par l'intermédiaire d'un dispositif de liaison (4; 9) couvrant l'espace vide, des efforts de pression ou de traction étant appliqués aux parties en relief (5) par l'intermédiaire du dispositif de liaison (4; 9) pour réduire des bruits générés lors du fonctionnement du frein,
**caractérisé en ce que**
le dispositif de liaison (4; 9) s'étend latéralement par rapport à l'étrier de frein, sur un côté du disque de frein.

2. Etrier de frein selon la revendication 1, où l'étrier est réalisé sous forme d'un étrier fixe ou d'un étrier flottant pour un frein à disque et entoure le disque de frein des deux côtés,
**caractérisé en ce que**
le côté extérieur de l'étrier de frein forme les parties en relief (5).

3. Etrier de frein selon la revendication 1 ou 2,
**caractérisé en ce que**
les parties en relief (5) sont réalisées sous forme d'un plateau (6) pourvu d'un filetage intérieur.

4. Etrier de frein selon l'une des revendications 1 à 3,
**caractérisé en ce que**
le dispositif de liaison (4; 9; 10) est réalisé sous forme d'une jambe de force et est vissé sur les plateaux (6).

5. Etrier de frein selon l'une des revendications 1 à 3,
**caractérisé en ce que**
le dispositif de liaison (4; 9; 10) est réalisé sous forme d'un câble.

6. Etrier de frein selon l'une des revendications 1 à 5,
**caractérisé en ce que**
le dispositif de liaison (4; 9; 10) comporte un tendeur (7) par l'intermédiaire duquel l'effort de pression ou de serrage appliqué aux parties en relief (5) peut être réglé.

7. Etrier de frein selon l'une des revendications 1 à 6,
**caractérisé en ce que**
le dispositif de liaison (4; 9; 10) agit comme un élément refroidisseur.
